# EUROPEAN PATENT APPLICATION

(11) **EP 4 738 943 A2**
(43) Date of publication of application: **06.05.2026**
(21) Application number: 26159897.3
(22) Date of filing: 08.05.2021
(51) Int. Cl.: H04W 52/02

(54) **METHOD, APPARATUS, AND NON-TRANSITORY COMPUTER PROGRAM PRODUCT FOR CONFIGURING SIDELINK DRX**

(62) Divisional of application: 21941052.9
(71) Applicant: ZTE Corporation, Shenzhen, Guangdong 518057 (CN)
(72) Inventor: LUO, Wei, Shenzhen, 518057 (CN); CHEN, Lin, Shenzhen, 518057 (CN); DU, Weiqiang, Shenzhen, 518057 (CN)
(74) Representative: Vossius & Partner Patentanwälte Rechtsanwälte mbB

(57) **Abstract**

The present disclosure describes methods, system, and devices for configuring a sidelink discontinuous reception (DRX). One method includes determining, by a first user equipment (UE), whether a reporting condition is satisfied; and in response to determining that the reporting condition is satisfied, sending, by the first UE, a DRX configuration information of the first UE to the network. In one implementation, the first UE may be a receiving (RX) UE. Another method includes obtaining, by the first UE, a list of DRX configurations; determining, by the first UE, at least one DRX configuration from the list of DRX configurations; and monitoring, by the first UE, a PC5 message according to the at least one DRX configuration.

## Description

### TECHNICAL FIELD

The present disclosure is directed generally to wireless communications. Particularly, the present disclosure relates to methods, devices, and systems for configuring a sidelink discontinuous reception (DRX).

### BACKGROUND

User equipments (UEs) in a wireless network may communicate data with one another via direct sidelink (SL) communication channels without the data being relayed by any wireless access network nodes. In some application scenarios of sidelink communications such as those involving vehicular wireless network devices, communication resource allocation and configuration for one communication terminal may involve another communication terminal in addition to a base station. It is critical to provide a resource allocation, provisioning, and release mechanism to enable low-power and efficient use of sidelink communication resources.

There are various problems/issues with the sidelink communication. The present disclosure describes various embodiments for configuring a sidelink discontinuous reception (DRX), addressing one or more problems/issues and improving the efficiency of the sidelink DRX mechanism.

### SUMMARY

This document relates to methods, systems, and devices for wireless communication, and more specifically, for configuring a sidelink discontinuous reception (DRX).

In one embodiment, the present disclosure describes a method for wireless communication. The method includes configuring a sidelink discontinuous reception (DRX) by: determining, by a first user equipment (UE), whether a reporting condition is satisfied; and in response to determining that the reporting condition is satisfied, sending, by the first UE, a DRX configuration information of the first UE to the network. In one implementation, the first UE may be a receiving (RX) UE.

In another embodiment, the present disclosure describes a method for wireless communication. The method includes configuring, by a first user equipment (UE), a sidelink discontinuous reception (DRX) by: obtaining, by the first UE, a list of DRX configurations; determining, by the first UE, at least one DRX configuration from the list of DRX configurations; and monitoring, by the first UE, a PC5 message according to the at least one DRX configuration.

In another embodiment, the present disclosure describes a method for wireless communication. The method includes configuring, by a first user equipment (UE), a sidelink discontinuous reception (DRX) by: determining, by the first UE, whether a second UE supports a DRX capability; and in response to determining that the second UE supports the DRX capability, determining, by the first UE, whether to activate the DRX function. In one implementation, the second UE may be a receiving (TX) UE.

In another embodiment, the present disclosure describes a method for wireless communication. The method includes configuring a sidelink discontinuous reception (DRX) by: receiving, by a user equipment (UE), a sidelink transmission or reception resource pool information from a network, or preconfiguring the sidelink transmission or reception resource pool information, wherein the sidelink transmission or reception resource pool information comprises an indication information indicating at least one of the following: whether a sidelink DRX capable UE can use a sidelink resource pool; whether a sidelink DRX non-capable UE can use the sidelink resource pool; that only the sidelink DRX capable UE can use the sidelink resource pool; or that only the sidelink DRX non-capable UE can use the sidelink resource pool.

In another embodiment, the present disclosure describes a method for wireless communication. The method includes configuring a sidelink discontinuous reception (DRX) by: determining, by a first user equipment (UE), whether the first UE is an in-coverage (IC) UE; and in response to determining the first UE is the in-coverage (IC) UE, configuring, by the first UE, at least one DRX configuration for a groupcast mode or a broadcast mode, wherein the at least one DRX configuration includes all DRX configurations received from a serving cell, received from a non-serving cell, and pre-configured.

In some other embodiments, an apparatus for wireless communication may include a memory storing instructions and a processing circuitry in communication with the memory. When the processing circuitry executes the instructions, the processing circuitry is configured to carry out the above methods.

In some other embodiments, a device for wireless communication may include a memory storing instructions and a processing circuitry in communication with the memory. When the processing circuitry executes the instructions, the processing circuitry is configured to carry out the above methods.

In some other embodiments, a computer-readable medium comprising instructions which, when executed by a computer, cause the computer to carry out the above methods.

The above and other aspects and their implementations are described in greater detail in the drawings, the descriptions, and the claims.

### BRIEF DESCRIPTION OF THE DRAWINGS

FIG. 1 illustrates an example diagram of a wireless communication network in accordance with various embodiments.
FIG. 2 shows an example of a wireless network node.
FIG. 3 shows an example of a user equipment.
FIG. 4 shows a flow diagram of a method for wireless communication.
FIG. 5 shows a flow diagram of a method for wireless communication.
FIG. 6 shows a flow diagram of a method for wireless communication.
FIG. 7 shows a flow diagram of a method for wireless communication.
FIG. 8 shows a flow diagram of a method for wireless communication.

### DETAILED DESCRIPTION

The present disclosure will now be described in detail hereinafter with reference to the accompanied drawings, which form a part of the present disclosure, and which show, by way of illustration, specific examples of embodiments. Please note that the present disclosure may, however, be embodied in a variety of different forms and, therefore, the covered or claimed subject matter is intended to be construed as not being limited to any of the embodiments to be set forth below.

Throughout the specification and claims, terms may have nuanced meanings suggested or implied in context beyond an explicitly stated meaning. Likewise, the phrase "in one embodiment" or "in some embodiments" as used herein does not necessarily refer to the same embodiment and the phrase "in another embodiment" or "in other embodiments" as used herein does not necessarily refer to a different embodiment. The phrase "in one implementation" or "in some implementations" as used herein does not necessarily refer to the same implementation and the phrase "in another implementation" or "in other implementations" as used herein does not necessarily refer to a different implementation. It is intended, for example, that claimed subject matter includes combinations of exemplary embodiments or implementations in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" or "at least one" as used herein, depending at least in part upon context, may be used to describe any feature, structure, or characteristic in a singular sense or may be used to describe combinations of features, structures or characteristics in a plural sense. Similarly, terms, such as "a", "an", or "the", again, may be understood to convey a singular usage or to convey a plural usage, depending at least in part upon context. In addition, the term "based on" or "determined by" may be understood as not necessarily intended to convey an exclusive set of factors and may, instead, allow for existence of additional factors not necessarily expressly described, again, depending at least in part on context.

The present disclosure describes various methods and devices for configuring a sidelink discontinuous reception (DRX).

New generation (NG) mobile communication system are moving the world toward an increasingly connected and networked society. High-speed and low-latency wireless communications rely on efficient network resource management and allocation between user equipment and wireless access network nodes (including but not limited to wireless base stations). A new generation network is expected to provide high speed, low latency and ultra-reliable communication capabilities and fulfill the requirements from different industries and users.

A vehicle network refers to a network system for wireless communication and information exchange among vehicles, pedestrians, roadside equipments, and the Internet and other data networks in accordance with various communication protocols and data exchange standards. Vehicle network communication helps improve road safety, enhance traffic efficiency, and provide broadband mobile data access and inter-network node data exchanges. The vehicle network communication may be categorized into various types as differentiated according to the communication endpoints, including but not limited to vehicle-to-vehicle (V2V) communication, vehicle-to-infrastructure/vehicle-to-network (V2I/V2N) communication, and vehicle-to-pedestrian (V2P) communication. These types of communication are referred to, collectively, as vehicle-to-everything (V2X) communication.

Such a vehicle network may heavily rely on sidelink communication between the terminal devices or user equipments (UEs) in the network. Sidelink communication, as used in this disclosure, refers to a direct wireless information exchange between UEs. Sidelink (SL) is a unilateral wireless communication service, i.e., the communication between the communication terminals or user equipment (UE). Vehicle networking refers to a large scale system for wireless communication and information exchange among vehicles, pedestrians, roadside equipment, and internet in accordance with agreed communication protocols and data exchange standards. The vehicle networking communications enable the vehicles to gain driving safety, improve traffic efficiency, and acquire convenience or entertainment information. The vehicle networking communication may be categorized into three types as per the objects of wireless communication: the communication between vehicles, i.e., vehicle-to-vehicle (V2V); the communication between vehicles and roadside equipment/network infrastructures, i.e., vehicle-to-infrastructure/vehicle-to-network (V2I/V2N); and the communication between vehicles and pedestrians, i.e., vehicle-to-pedestrian (V2P). These types of communications collectively are referred to as vehicle-to-everything (V2X) communication.

In the V2X communication research of 3rd Generation Partnership Project (3GPP), the sidelink based V2X communication between user equipment is one of the manners to implement the V2X standard, in which traffic data is directly transmitted from a source UE to a destination UE via an air interface without forwarding by the base station and the core network. This V2X communication is referred to as PC5-based V2X communication or V2X sidelink communication.

With the technology advancement and development of the automation industry, the scenarios for V2X communications are further diversified and require higher performance. The advanced V2X services include vehicle platooning, extended sensors, advanced driving (semi-automated driving and full-automated driving), and remote driving. The desired performance requirements may include: supporting data packet with the size of 50 to 12000 bytes, transmission rate with 2 to 50 messages per second, the maximum end-to-end delay of 3 to 500 milliseconds, reliability of 90% to 99.999%, data rate of 0.5 to 1000 Mbps, as well as transmission range of 50 to 1000 meters.

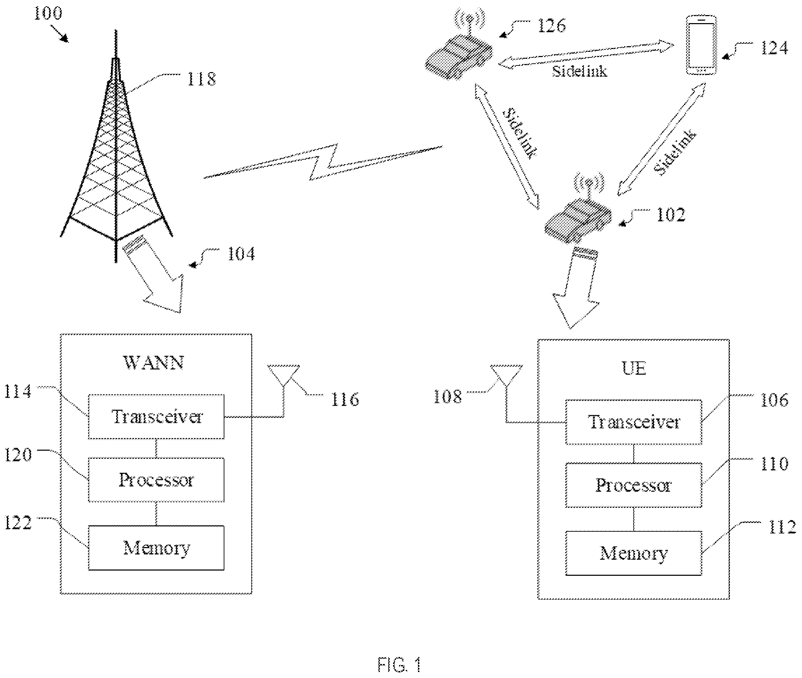

An example V2X subsystem based on sidelink communication technology is illustrated as part of FIG. 1 and may be referred to as, for example, PC5-based V2X communication or V2X sidelink communication.

While being capable of communicating among themselves using sidelinks, the various UEs described above may also be connected to wireless access networks, and to a core network via the access networks. The wireless access network and core network may be involved in configuring and provisioning communication resources needed for data and control information transmission/reception for sidelink communication. An example wireless access network may be based on, for example, cellular 4G LTE or 5G NR technologies and/or formats. FIG. 1 shows an example system diagram of a wireless access communication network 100 including UEs 102, 124, and 126 as well as a wireless access network node (WANN) 104. Each of the UEs 102, 124, and 126 may include but is not limited to a mobile phone, a smartphone, a tablet, a laptop computer, a vehicle on-board communication equipment, a roadside communication equipment, a sensor device, a smart appliance (such as a television, a refrigerator, and an oven), or other devices that are capable of communicating wirelessly over a network. The UEs may indirectly communicate with each other via the WANN 104 or directly via sidelinks. As shown in FIG 1, each of the UEs such as UE 102 may include transceiver circuitry 106 coupled to an antenna 108 to effectuate wireless communication with the WANN 104 or with another UE such as UE 124 or 126. The transceiver circuitry 106 may also be coupled to a processor 110, which may also be coupled to a memory 112 or other storage devices. The memory 112 may store therein computer instructions or code which, when read and executed by the processor 110, cause the processor 110 to implement various ones of the methods for sidelink resource allocation/configuration/release and data transmission/reception described herein.

Similarly, the WANN 104 may include a base station or other wireless network access points capable of communicating wirelessly over a network with one or more UEs and communicating with a core network. For example, the WANN 104 may be implemented in the form of a 4G LTE base station, a 5G NR base station, a 5G central-unit base station, or a 5G distributed-unit base station. Each type of these WANNs may be configured to perform a corresponding set of wireless network functions. The WANN 104 may include transceiver circuitry 114 coupled to an antenna 116, which may include an antenna tower 118 in various forms, to effectuate wireless communications with the UEs 102, 124, and 126. The transceiver circuitry 114 may be coupled to one or more processors 120, which may further be coupled to a memory 122 or other storage devices. The memory 122 may store therein instructions or code that, when read and executed by the processor 120, cause the processor 120 to implement various functions. These functions, for example, may include those related to the sidelink resource allocation, configuration, provisioning and releases described below.

For simplicity and clarity, only one WANN and three UEs are shown in the wireless communication access network 100. It will be appreciated that one or more WANNs may exist in the wireless communication network, and each WANN may serve one or more UEs. While the UEs 102, 124, and 126 of Figure 1 are shown as being served within one serving cell, they may alternatively be served by different cells and/or by no cell. While various embodiments of sidelink communication below are discussed in the context of the particular example cellular wireless communication access network 100, the underlying principle apply to other types of wireless communication networks.

Sidelink communication among the various UEs of FIG. 1 may support co-existence of various distinct communication cast types including unicast, group-cast (or multicast), and broadcast. In one implementation, the cast type may be referred as a cast mode. In conventional technologies, the UEs deployed in the access network 100 may be required to perform exhaustive monitoring of a large range of sidelink wireless resources in either unicast, group-cast, or broadcast mode, thereby incurring a large power consumption. Such power consumption may be at an unacceptably high level for some low power UEs.

In the sidelink communication such as V2X communication between UEs, the UEs monitor the sidelink signals within the entire range of sidelink receive resource pool, which can result in large power consumption and reduced efficiency. One of the objectives of the present disclosure is to reduce the power consumption of the sidelink communication while meeting the time delay requirements.

One manner of reducing power consumption when using sidelink (SL) communication between UEs is to utilize discontinuous reception (DRX) and/or discontinuous transmission (DTX) methodologies. However, such SL DRX requires that the transmission UE and reception UE at least know the DRX configuration of the corresponding UE. DRX configuration information may include, for example, a delay (e.g., sl-drx-SlotOffset) before starting an on duration timer (e.g., sl-drx-onDurationTimer); the on duration timer (e.g., sl-drx-onDurationTimer), which is the duration at the beginning of an SL DRX cycle; a subtrame where the SL DRX cycle starts (sl-drx-StartOffset); and the SL DRX cycle (sl-drx-Cycle). This disclosure discusses methods in which these configuration information/parameters are determined and communicated amongst UEs and/or how the UE configures these configuration information/parameters.

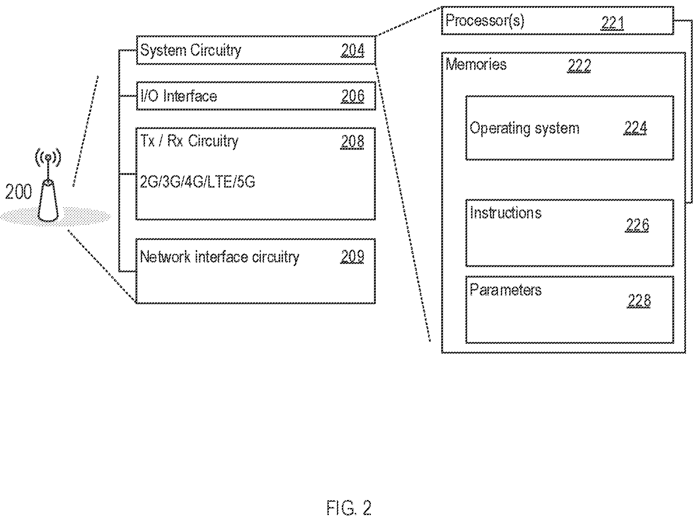

FIG. 2 shows an example of electronic device 200 to implement a network base station (e.g., a radio access network node), a core network (CN), and/or an operation and maintenance (OAM). Optionally in one implementation, the example electronic device 200 may include radio transmitting/receiving (Tx/Rx) circuitry 208 to transmit/receive communication with UEs and/or other base stations. Optionally in one implementation, the electronic device 200 may also include network interface circuitry 209 to communicate the base station with other base stations and/or a core network, e.g., optical or wireline interconnects, Ethernet, and/or other data transmission mediums/protocols. The electronic device 200 may optionally include an input/output (I/O) interface 206 to communicate with an operator or the like.

The electronic device 200 may also include system circuitry 204. System circuitry 204 may include processor(s) 221 and/or memory 222. Memory 222 may include an operating system 224, instructions 226, and parameters 228. Instructions 226 may be configured for the one or more of the processors 221 to perform the functions of the network node. The parameters 228 may include parameters to support execution of the instructions 226. For example, parameters may include network protocol settings, bandwidth parameters, radio frequency mapping assignments, and/or other parameters.

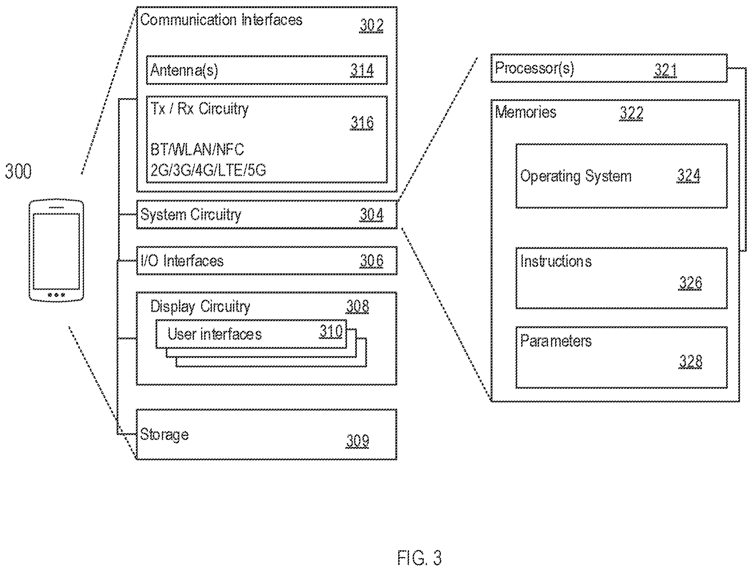

FIG. 3 shows an example of an electronic device to implement a terminal device 300 (for example, a user equipment (UE)). The UE 300 may be a mobile device, for example, a smart phone or a mobile communication module disposed in a vehicle. The UE 300 may include a portion or all of the following: communication interfaces 302, a system circuitry 304, an input/output interfaces (I/O) 306, a display circuitry 308, and a storage 309. The display circuitry may include a user interface 310. The system circuitry 304 may include any combination of hardware, software, firmware, or other logic/circuitry. The system circuitry 304 may be implemented, for example, with one or more systems on a chip (SoC), application specific integrated circuits (ASIC), discrete analog and digital circuits, and other circuitry. The system circuitry 304 may be a part of the implementation of any desired functionality in the UE 300. In that regard, the system circuitry 304 may include logic that facilitates, as examples, decoding and playing music and video, e.g., MP3, MP4, MPEG, AVI, FLAC, AC3, or WAV decoding and playback; running applications; accepting user inputs; saving and retrieving application data; establishing, maintaining, and terminating cellular phone calls or data connections for, as one example, internet connectivity; establishing, maintaining, and terminating wireless network connections, Bluetooth connections, or other connections; and displaying relevant information on the user interface 310. The user interface 310 and the inputs/output (I/O) interfaces 306 may include a graphical user interface, touch sensitive display, haptic feedback or other haptic output, voice or facial recognition inputs, buttons, switches, speakers and other user interface elements. Additional examples of the I/O interfaces 306 may include microphones, video and still image cameras, temperature sensors, vibration sensors, rotation and orientation sensors, headset and microphone input / output jacks, Universal Serial Bus (USB) connectors, memory card slots, radiation sensors (e.g., IR sensors), and other types of inputs.

Referring to FIG. 3, the communication interfaces 302 may include a Radio Frequency (RF) transmit (Tx) and receive (Rx) circuitry 316 which handles transmission and reception of signals through one or more antennas 314. The communication interface 302 may include one or more transceivers. The transceivers may be wireless transceivers that include modulation / demodulation circuitry, digital to analog converters (DACs), shaping tables, analog to digital converters (ADCs), filters, waveform shapers, filters, pre-amplifiers, power amplifiers and/or other logic for transmitting and receiving through one or more antennas, or (for some devices) through a physical (e.g., wireline) medium. The transmitted and received signals may adhere to any of a diverse array of formats, protocols, modulations (e.g., QPSK, 16-QAM, 64-QAM, or 256-QAM), frequency channels, bit rates, and encodings. As one specific example, the communication interfaces 302 may include transceivers that support transmission and reception under the 2G, 3G, BT, WiFi, Universal Mobile Telecommunications System (UMTS), High Speed Packet Access (HSPA)+, 4G / Long Term Evolution (LTE) , and 5G standards. The techniques described below, however, are applicable to other wireless communications technologies whether arising from the 3rd Generation Partnership Project (3GPP), GSM Association, 3GPP2, IEEE, or other partnerships or standards bodies.

Referring to FIG. 3, the system circuitry 304 may include one or more processors 321 and memories 322. The memory 322 stores, for example, an operating system 324, instructions 326, and parameters 328. The processor 321 is configured to execute the instructions 326 to carry out desired functionality for the UE 300. The parameters 328 may provide and specify configuration and operating options for the instructions 326. The memory 322 may also store any BT, WiFi, 3G, 4G, 5G or other data that the UE 300 will send, or has received, through the communication interfaces 302. In various implementations, a system power for the UE 300 may be supplied by a power storage device, such as a battery or a transformer.

The present disclosure describes various embodiments for configuring a sidelink discontinuous reception (DRX), which may be implemented, partly or totally, on one or more electronic device 200 and/or one or more terminal device 300 described above in FIGS. 2-3.

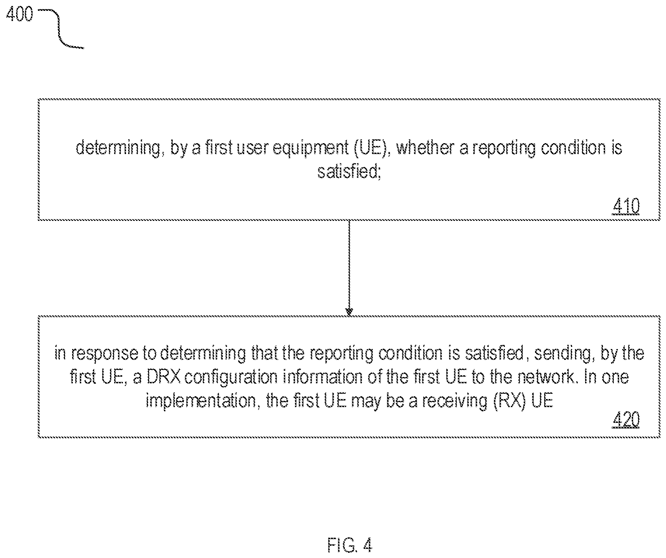

In one embodiment, referring to FIG. 4, a method 400 for wireless communication includes configuring a sidelink discontinuous reception (DRX). The method 400 may include a portion or all of the following steps: step 410, determining, by a first user equipment (UE), whether a reporting condition is satisfied; and step 420, in response to determining that the reporting condition is satisfied, sending, by the first UE, a DRX configuration information of the first UE to the network. In one implementation, the first UE may be a receiving (RX) UE.

In another implementation, the DRX configuration information comprises indication indicating that the first UE is interested in a sidelink unicast transmission or reception.

In another implementation, the DRX configuration information comprises indication indicating a destination layer 2 ID.

In another implementation, in response to receiving multiple DRX configuration from the network and each DRX configuration is associated to an index, the DRX configuration information comprises a list of indexes of the DRX configuration.

In another implementation, the DRX configuration information comprises a UE group ID or a UE group member ID.

In another implementation, the UE group ID or the UE group member ID may be used for determining a timing at which the DRX configuration information is sent.

In another implementation, the UE group ID is obtained based on a L2 source ID or a L2 destination ID.

In another implementation, the reporting condition comprises at least one of the following: upon change of the DRX configuration; upon successful connection establishment or resuming; upon change of interest; upon changing QoS profiles; or upon acquiring the DRX configuration from an associated peer UE.

For one example, in various embodiments, when a UE is interested in one or more of the casting modes, including unicast mode, groupcast mode, and broadcast mode, the network may need to acquire the DRX configuration of the UE and the peer UE.

In the situations of the UE being interested in the unicast mode, the UE may need to send a DRX configuration of the UE and the target UE to the network. When the UE has not established a connection with the target UE yet, the UE may report at least one of the following: the UE's interest in the unicast mode and no successfully established connection yet; or all DRX configurations of the UE and the target UE.

In the situation of the UE being interested in the groupcast mode or the broadcast mode, the UE may report a DRX configuration of the UE and/or the target UE. In another implementation, when the DRX configuration is configured by the network and each DRX configuration is associated with an ID or index, the UE may report the ID or index corresponding to the DRX configuration. In another implementation, when the timing of transmission relates to a UE group ID, the UE may report the UE group ID.

In another implementation, the UE group ID may be derived from a L2 source ID or a L2 destination ID.

In another implementation, a trigger triggers the report from the UE may include at least one of the following: a change of the DRX configuration; or a change of interested service by the UE.

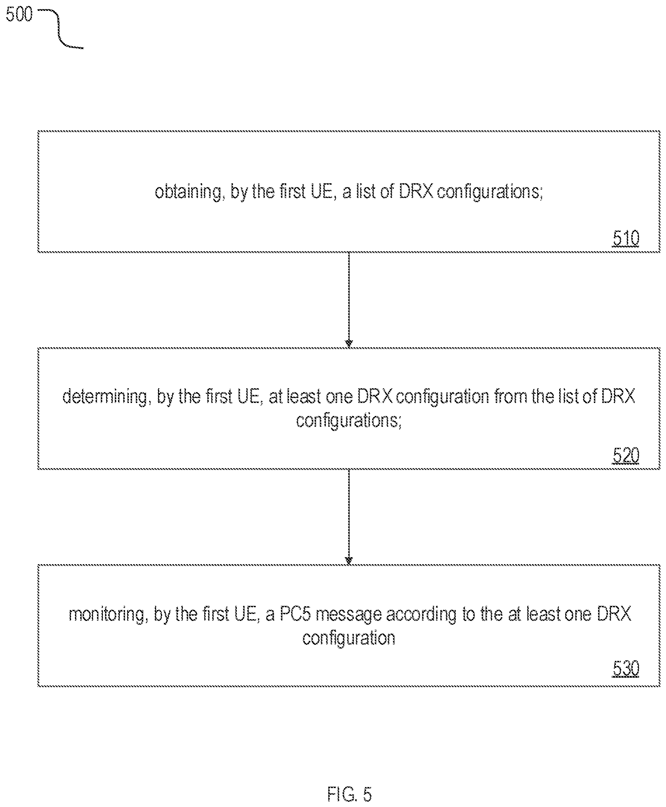

In one embodiment, referring to FIG. 5, a method 500 for wireless communication includes configuring, by a first user equipment (UE), a sidelink discontinuous reception (DRX). The method 500 may include a portion or all of the following steps: step 510, obtaining, by the first UE, a list of DRX configurations; step 520, determining, by the first UE, at least one DRX configuration from the list of DRX configurations; and step 530, monitoring, by the first UE, a PC5 message according to the at least one DRX configuration.

In one implementation, the list of DRX configurations comprises at least one DRX configuration obtained from a network or per-configured.

In another implementation, the first UE sends the at least one DRX configuration to a second UE in a groupcast mode or a broadcast mode.

In another implementation, at least one DRX configuration of the list of DRX configurations is associated with a set of quality of service (QoS) parameters.

In another implementation, if a DRX configuration of the list of DRX configurations is associated with no QoS parameters, this DRX configuration is used during layer-2 link establishment procedure for sidelink unicast mode.

In another implementation, if a DRX configuration of the list of DRX configurations is associated with no QoS parameters, this DRX configuration is used before the pair of UE establish PC5 RRC connection.

In another implementation, if a UE cannot acquire the QoS information for a destination id, it use the DRX configuration of the list of DRX configurations that is associated with no QoS parameters.

In another implementation, each DRX configuration of the list of DRX configurations comprises a DRX cycle and a plurality of slot offsets or cycle start offsets. The slot offset, alternatively referred as drx-SlotOffset, may indicate a delay before starting an on-duration timer, alternatively referred as drx-onDurationTimer. The cycle start offset, alternatively referred as drx-CycleStartOffset, may indicate a DRX cycle and drx-StartOffset which defines the subframe where the DRX cycle starts.

In another implementation, each DRX configuration of the list of DRX configurations comprises a DRX cycle, an on-duration timer, an inactivity timer, and a plurality of slot offsets or cycle start offsets.

In another implementation, each DRX configuration of the list of DRX configurations comprises a DRX cycle, an on-duration timer, a slot offset or a cycle start offset, an interval T, and a number N.

In another implementation, the interval T is an interval between two slot offsets or two cycle start offsets.

In another implementation, the number N is a number of slot offsets or cycle start offsets.

In another implementation, the step of obtaining the list of DRX configurations may include determining, by the first UE, a list of QoS based on a destination ID; and obtaining, by the first UE, the list of DRX configurations based on each QoS in the list of QoS.

In another implementation, one solution may include that, in response to more than one DRX configurations corresponding to the destination ID: the first UE selects a DRX configuration comprising a shortest DRX cycle.

In another implementation, the DRX configuration comprises a DRX cycle, an on-duration timer, an inactivity timer, and a plurality of slot offsets or cycle start offsets.

In another implementation, the first UE determines the slot offset or cycle start offset based on the destination ID.

In another implementation, the slot offset or cycle start offset based on the destination ID is a I-th value in a slot offset list or cycle start offset list corresponding to the DRX configuration, I being mod (ID, N) +1, wherein: mod is a modulus function, ID is the destination ID, and N is a number of slot offsets or cycle start offset.

In another implementation, DRX configuration information comprises the number of slot offsets (N).

In another implementation, in response to DRX configuration information comprising only one slot offset, the first UE determines the slot offset for the associated destination ID.

In another implementation, another solution may include that, in response to more than one QoS profiles corresponding to the destination ID associating to more than one DRX configurations: the first UE determines more than one DRX configuration based on the more than one DRX configurations.

In another implementation, the first UE determines more than one DRX cycles and more than one on-duration timers for the determined more than one DRX configurations corresponding to the destination ID based on the more than one DRX configurations.

In another implementation, the first UE determines an inactivity timer for the determined more than one DRX configurations corresponding to the destination ID based on at least one of the following: a minimum value of more than one for inactivity timers based on the more than one DRX configurations; an average value of the more than one for inactivity timers based on the more than one DRX configurations; or an inactivity timer of a selected DRX configuration based on the more than one DRX configurations. In another implementation, the selected DRX configuration comprises a shortest DRX cycle.

In another implementation, in response to each DRX configuration comprising a slot offset, the first UE determines a slot offset for an on-duration timer based on the slot offset in each DRX configuration.

In another implementation, in response to each DRX configuration comprising more than one slot offsets, the first UE determines a slot offset for an on-duration timer based on the destination ID corresponding to each DRX configuration.

For one example, in various embodiments, a power saving need configured by a network or pre-configured may be mapped based on a mapping relationship to a value or a range of values for an inactive timer; and/or a QoS parameter configured by a network or pre-configured may be mapped based on another mapping relationship to a value or a range of values for an inactive timer
In one implementation, multiple DRX configurations may be configured by a network or pre-configured.

In another implementation, each DRX configuration of the multiple DRX configurations may be mapped with a set of Qos parameters.

In another implementation, one or more DRX configuration of the multiple DRX configurations may be mapped with a set of Qos parameters.

In another implementation, an on-duration timer may be referred as drx-onDurationTimer, indicating the duration at the beginning of a DRX cycle.

In another implementation, a slot offset may be referred as drx-SlotOffset, indicating the delay before starting the drx-onDurationTimer;
In another implementation, an inactive timer (or inactivity timer) may be referred as drx-InactivityTimer, indicating the duration after the PDCCH occasion in which a PDCCH indicates a new UL or DL transmission for the MAC entity.

In another implementation, a cycle start offset may referred as drx-CycleStartOffset, indicating the DRX cycle and drx-StartOffset which defines the subframe where the DRX cycle starts.

In another implementation, each DRX configuration may include one DRX cycle and one or more slot offset.

In another implementation, each DRX configuration may include one DRX cycle, one DRX onDurationTimer, one InactivityTimer and one or more SlotOffsets.

In another implementation, each DRX configuration may include one DRX cycle, one DRX onDurationTimer, one InactivityTimer, one SlotOffsets, the interval between two slot offset such as T and the number of SlotOffsets such as N.

In another implementation, the RX UE may determine a list of QoS based on one or more destination ID. Upon determining the list of QoS, the RX UE may determine a DRX configuration list corresponding to each QoS. In another implementation, if for a destination id, there are more than one QoS profile, which may associate to more than one DRX configuration.

For one solution, a UE may select a DRX configuration based on one or more selection rules.

In one implementation, one of the selection rules include to select a DRX configuration with the shortest DRX cycle. The UE may determine, based on the selected DRX configuration, one DRX cycle, one DRX onDurationTimer, one InactivityTimer and multiple SlotOffsets.

In another implementation, the UE may determine one or more SlotOffsets based on a destination ID. For example, but not limited to, index = MOD(DST ID, N) +1, and the slot offset corresonding to the destination ID may be the index-th value in a slot offset list corresponding to the DRX configuration.

In another implementation, the N may be included in the DRX configuration information.

In another implementation, the N is the number of the slot offsets in the associated DRX configuration information_{∘}

In another implementation, if there is only one SlotOffset included in the DRX configuration information, the UE may use this SlotOffset parameter of DRX for the associated destination ID.

In another implementation, when the UE is a transmitting (TX) UE, it may perform similar methods to determine a DRX configuration associated with a destination ID within a group of the receiving UE, and then to configure resource based on the DRX configuration.

For another solution, a UE may use more than one DRX configurations including one or more DRX cycle, and/or one or more on-duration timer.

In one implementation, the UE (for example, a RX UE) may maintain multiple DRX configurations including DRX cycle, on-duration timer for a destination id,

In another implementation, however, there is no need for a RX UE to maintain multiple inactivity timers for a destination id. Thus, if for a destination id, there are more than one QoS profiles and it may associate to more than one DRX configuration, then a value of inactivity timer may be determined and/or used based on one or more rules.

For one rule, a value of inactivity timer may be determined using the minimum value of multiple values of inactivity timer.

For another rule, a value of inactivity timer may be determined using an average value of multiple values of inactivity timer.

For another rule, a value of inactivity timer may be determined by selecting one DRX configuration.

In one implementation, the selecting one DRX configuration may be to select a DRX configuration with a shortest SL DRX cycle.

In another implementation, the UE may determine a timer for the destination ID based on the inactivity timer corresponding to the DRX configuration.

In another implementation, if each DRX configuration includes a slot offset, the UE may determine a start time of an on-duration timer based on a value of the slot offset.

In another implementation, if each DRX configuration includes more than one slot offset, the UE may determine one or more slot offset corresponding to each DRX configuration, based on the destination ID. A portion of this implementation may be similar to some of the descriptions of the first solution.

For one example, in various embodiments, a SL DRX configuration information may include the following.

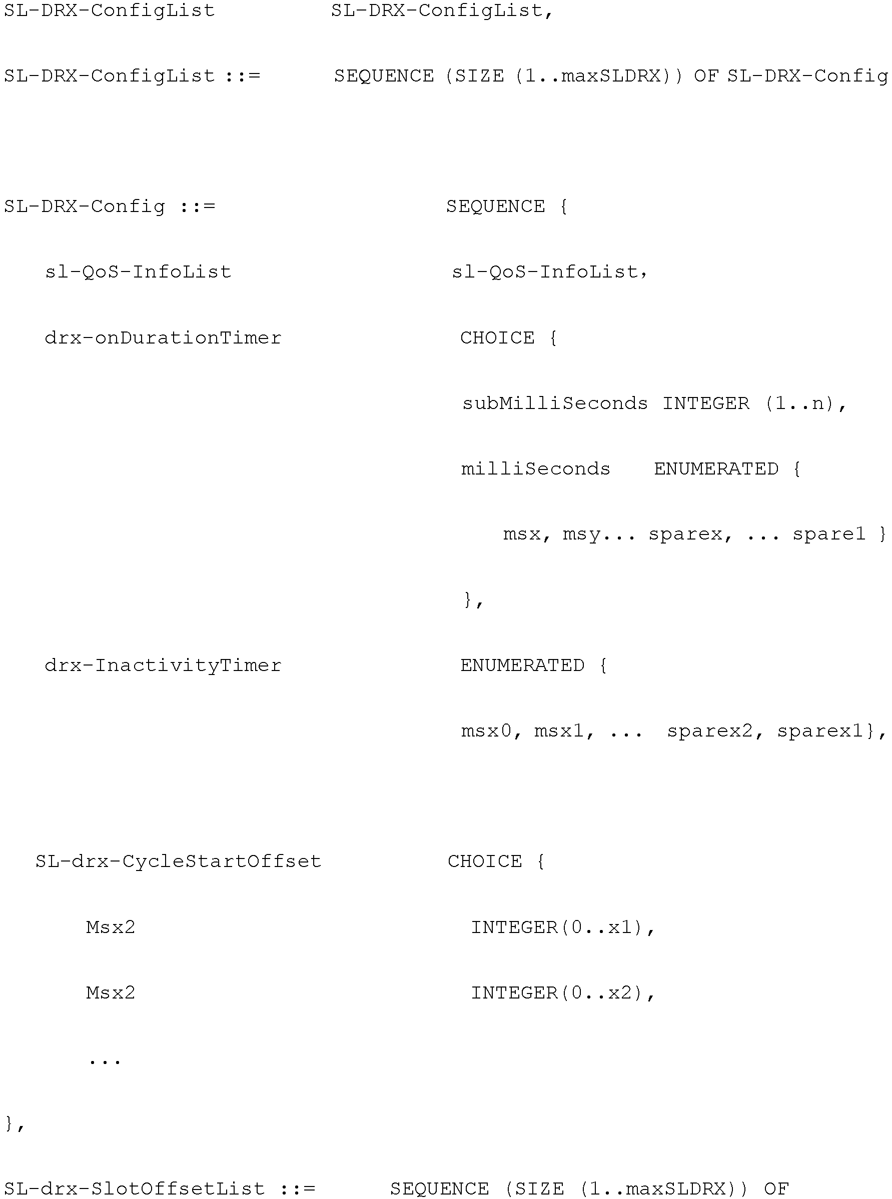

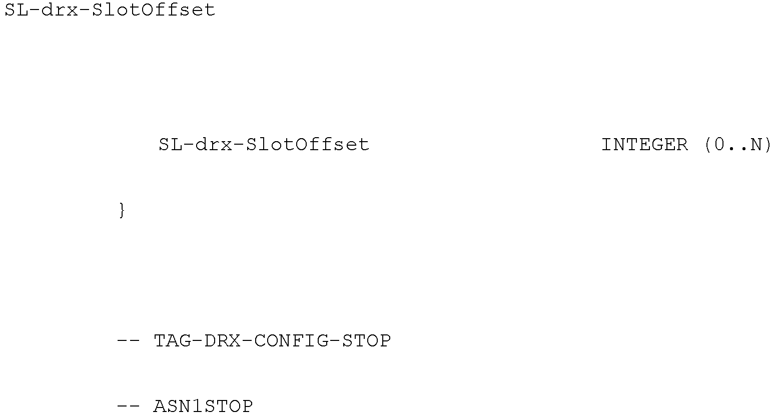

In one implementation, if a sl-QoS-InfoList is included in the SL-DRX-Config, the UE may use this DRX configuration when the QoS of message (such as data or signaling) for transmission or reception belongs to the sl-QoS-InfoList.

In another implementation, if a sl-QoS-InfoList is absent in the SL-DRX-Config and a QoS does not have a corresponding DRX configuration, the UE may use this configuration when the QoS of data for transmission or reception does not have a corresponding DRX configuration or the UE does not know the QoS of message for transmission or reception.

In another implementation the UE may use this DRX configuration for a sidelink groupcast or broadcast mode.

In another implementation, the network may provide the sl-QoS-InfoList which DRX is not used.

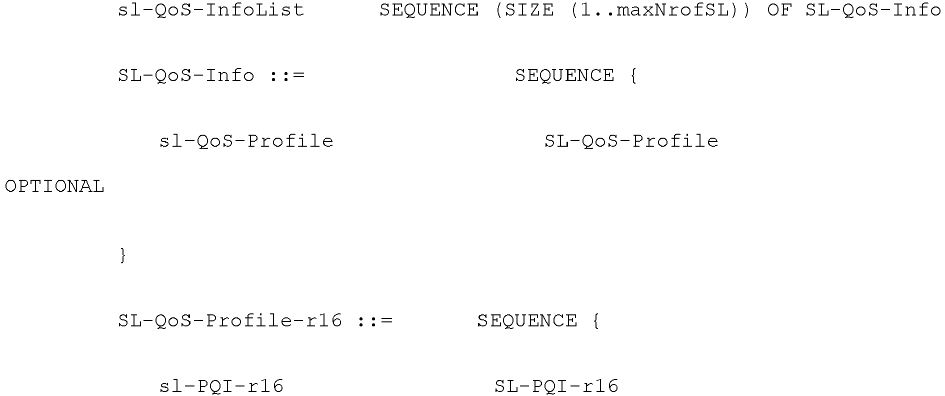

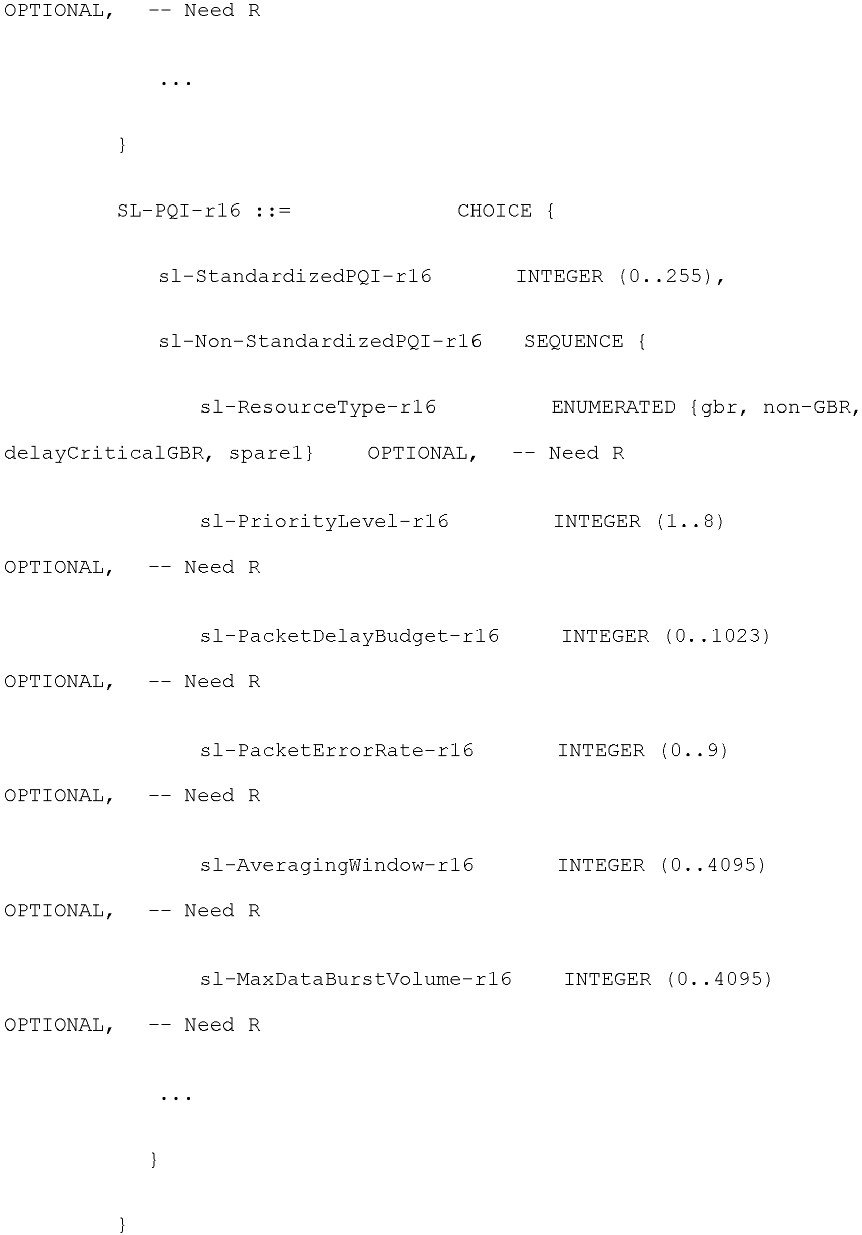

For another example, a QoS LIST may correspond to a DRX index.

In one implementation, the SL DRX configuration information may include the following.

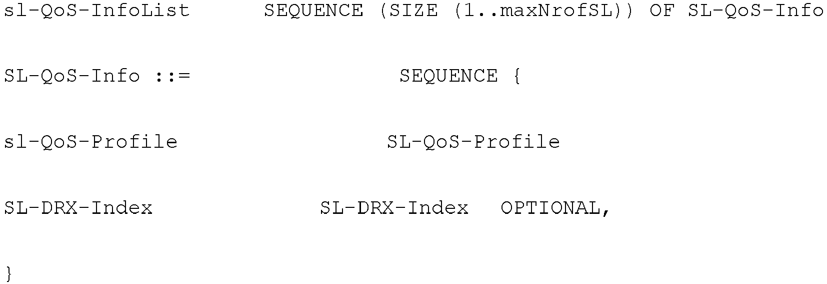

In another implementation, a SL-DRX-Index may indicate which DRX configuration is used for the service of associated QoS. If the SL-DRX-Index is absent, the DRX may not be used for this kind of service.

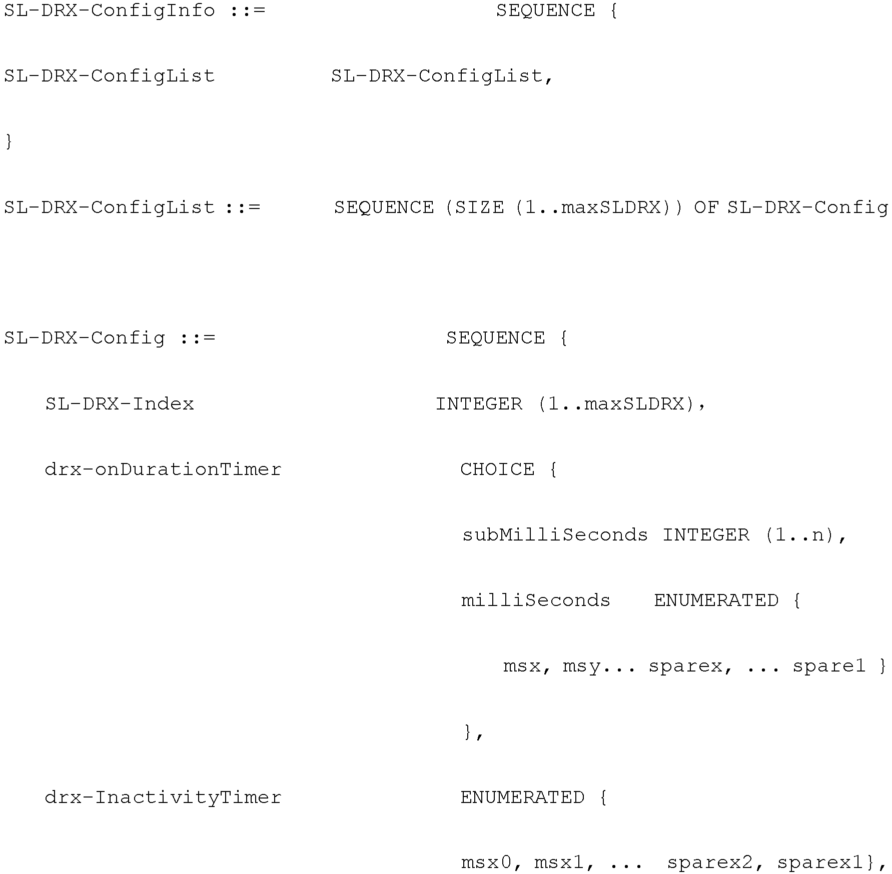

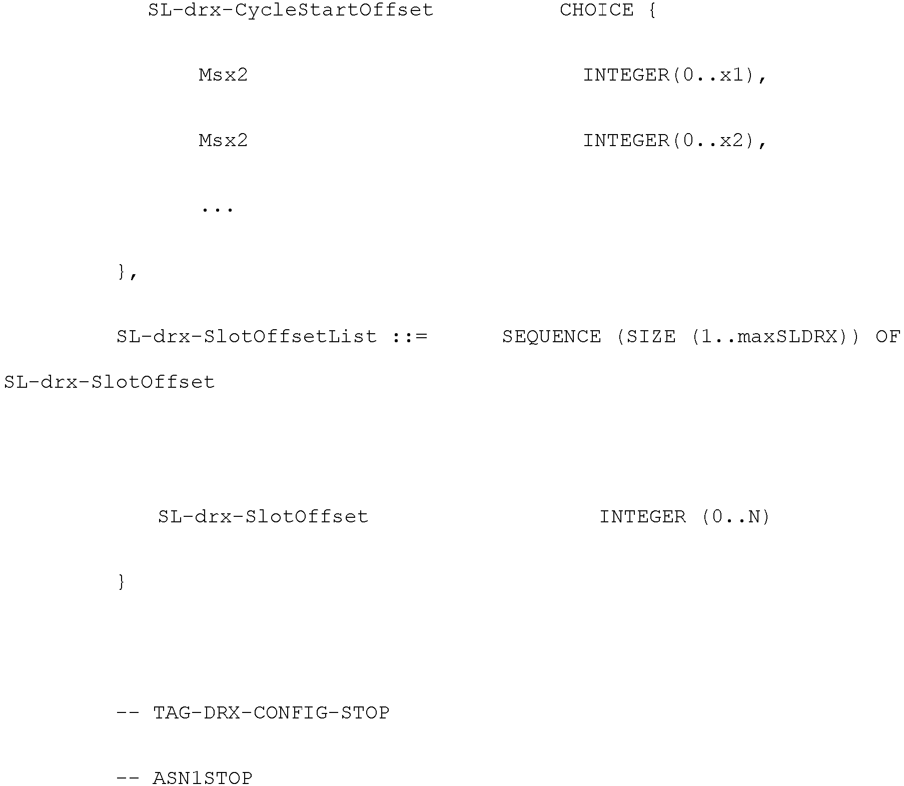

In another implementation, the SL-DRX-Index is absent. A QoS without a corresponding DRX configuration may be configured with this DRX configuration.

In another implementation, any sidelink groupcast or broadcast mode may use this DRX configuration.

Another example may include a HARQ RTT timer and a HARQ Retransmission timer as the following.

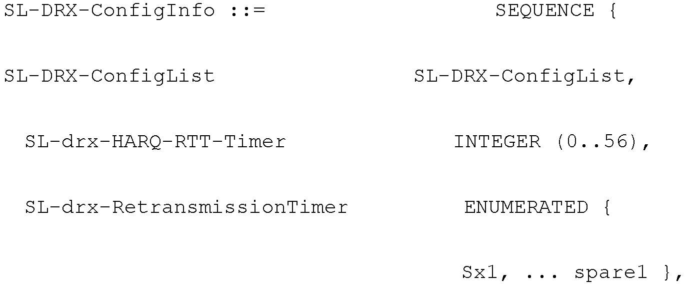

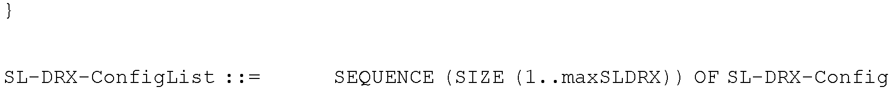

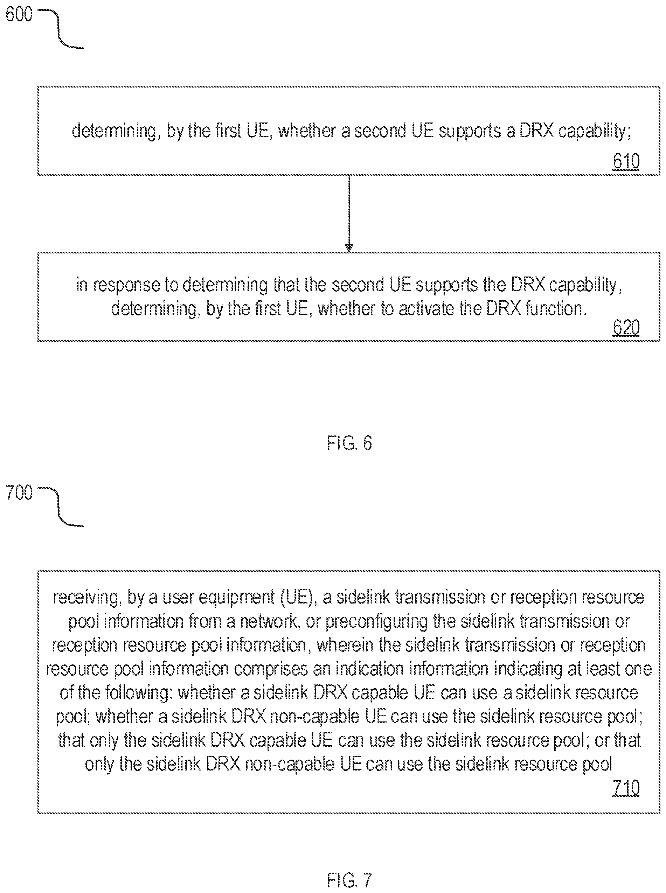

In one embodiment, referring to FIG. 6, a method 600 for wireless communication includes configuring, by a first user equipment (UE), a sidelink discontinuous reception (DRX). The method 600 may include a portion or all of the following steps: step 610, determining, by the first UE, whether a second UE supports a DRX capability; and step 620, in response to determining that the second UE supports the DRX capability, determining, by the first UE, whether to activate the DRX function. In one implementation, the second UE may be a receiving (TX) UE.

In one implementation, the step of determining, by the first UE, whether the second UE supports the DRX capability may include determining, by the first UE, whether the second UE supports the DRX capability based on at least one of the following: a destination ID or a cast type.

In another implementation, the first UE determines that the second UE is a R16 UE or the second UE does not support the DRX capability.

In another implementation, in response to the first UE determining that the second UE supports the DRX capability, determining, by the first UE, to activate the DRX function.

In another implementation, the step of determining, by the first UE, whether the TX UE supports the DRX capability may include determining, by the first UE, whether the second UE supports the DRX capability based on a group message via a non-access stratum (NAS) layer.

In one embodiment, referring to FIG. 7, a method 700 for wireless communication includes configuring a sidelink discontinuous reception (DRX). The method 700 may include a portion or all of the following steps: step 710, receiving, by a user equipment (UE), a sidelink transmission or reception resource pool information from a network, or preconfiguring the sidelink transmission or reception resource pool information, wherein the sidelink transmission or reception resource pool information comprises an indication information indicating at least one of the following: whether a sidelink DRX capable UE can use a sidelink resource pool; whether a sidelink DRX non-capable UE can use the sidelink resource pool; that only the sidelink DRX capable UE can use the sidelink resource pool; or that only the sidelink DRX non-capable UE can use the sidelink resource pool.

In one implementation, in response to the RX UE being unable to determine whether the TX UE supports the DRX capability, configuring, by the RX UE, a common DRX with an on-duration matching all receiving resource pools corresponding to all non-DRX capable UEs excluding all DRX capable UEs.

In another implementation, in response to the RX UE being unable to determine whether the TX UE supports the DRX capability, determining, by the RX UE, to activate the DRX capability.

In various embodiments, a method for configuring, by a transmitting (TX) user equipment (UE), a discontinuous reception (DRX) may include determining, by the TX UE, whether a receiving (RX) UE supports a DRX capability; and determining, by the TX UE, whether to consider a DRX configuration during transmitting to the RX UE.

In one implementation, the step of determining, by the TX UE, whether the RX UE supports the DRX capability may include determining, by the TX UE, whether the RX UE supports the DRX capability based on at least one of the following: a destination ID or a cast type.

In another implementation, the TX UE determines that the RX UE is a R16 UE or the RX UE does not support the DRX capability.

In another implementation, the step of determining, by the TX UE, whether the RX UE supports the DRX capability may include determining, by the TX UE, whether the RX UE supports the DRX capability based on a group message via access stratum (AS) layer.

In another implementation, in response to the TX UE being unable to determine whether the RX UE supports the DRX capability, transmitting, by the TX UE, resources to the RX UE corresponding to a DRX configuration.

In another implementation, the method may further include transmitting, by the TX UE, resources to the RX UE corresponding to a DRX configuration.

For one example, various embodiments may include one or more method for dealing with backward compatibility issue. In one implementation, one or more DRX-incapable UE, for example but not limited to, R16 UE, may not support sidelink DRX function, thus, the UE may not consider DRX configuration when using resource. When there is a DRX-capable UE, for example, a R17 UE, various implementations may deal with this issue, so that the DRX-capable UE may send and/or receive data to/from the DRX-incapable UE.

Let's taking a receiving (RX) UE as an example, for a first situation, if the RX UE knows whether a transmitting (TX) UE supports SL DRX function, the RX UE may determine by itself whether to activate the SL DRX function.

In one implementation, the RX UE may know whether a transmitting (TX) UE supports SL DRX function by one of the following methods.

For one method, a RX UE determines a TX UE being a R16 UE or a UE not supporting DRX function. For example, the RX UE determines the TX UE being a R16 UE or a UE not supporting DRX function based on based on a destination ID and/or a cast type (or a cast mode).

For another method, non-access stratum layer may communicate information related to DRX capability during group establishment, and then may communicate via group message regarding any UE in the group not supporting DRX function. In another implementation, this method may not be suitable for a broadcast mode.

A second situation may include that a RX UE is unable to know whether a transmitting (TX) UE supports SL DRX function.

In one implementation, when a network configures a DRX configuration, the on-duration time of DRX configuration may include all time domain of transmission resource pool of UEs not supporting SL DRX function (for example but not limited to, a R16 UE). In another implementation, a recommended common on-duration time may match a configuration of a transmission resource pool of UEs not supporting SL DRX function (for example but not limited to, a R16 UE).

In another implementation, it may be recommended to separate transmission resource pools of UEs not supporting SL DRX function and transmission resource pools of UEs supporting SL DRX function. The on-duration time of DRX configuration may include all time domain of transmission resource pools of UEs not supporting SL DRX function. In another implementation, the on-duration time of DRX configuration does not need to include all time domain of transmission resource pools of UEs supporting SL DRX function.

Thus, in another implementation, a DRX-capable UE may activate the DRX function without the need of considering whether a transmitting (TX) UE supports SL DRX function.

In another implementation, the sidelink resource pool information is associated an indication that indicates whether DRX capable UE can use a sidelink resource pool. In another implementation, a sidelink resource pool may include sidelink transmission resource pool or sidelink reception resource pool.

Let's taking a transmitting (TX) UE as an example, for a first situation, if the TX UE knows whether a receiving (RX) UE supports SL DRX function, the TX UE may determine whether to consider the SL DRX configuration when sending data.

In one implementation, a TX UE may know whether a RX UE supports SL DRX function by one of the following methods.

For one method, a TX UE determines a RX UE being a R16 UE or a UE not supporting DRX function. For example, the TX UE determines the RX UE being a R16 UE or a UE not supporting DRX function based on a destination ID and/or a cast type (or a cast mode).

For another method, non-access stratum layer may acquire information related to DRX capability during group establishment, and then pass the message indicating whether any UE in the group not supporting DRX function to the AS layer. In another implementation, this method may not be suitable for a broadcast mode.

A second situation may include that a TX UE is unable to know whether a RX UE supports SL DRX function. In one implementation, a DRX-capable UE may send data based on a SL DRX configuration without the need of considering whether a RX UE supports SL DRX function.

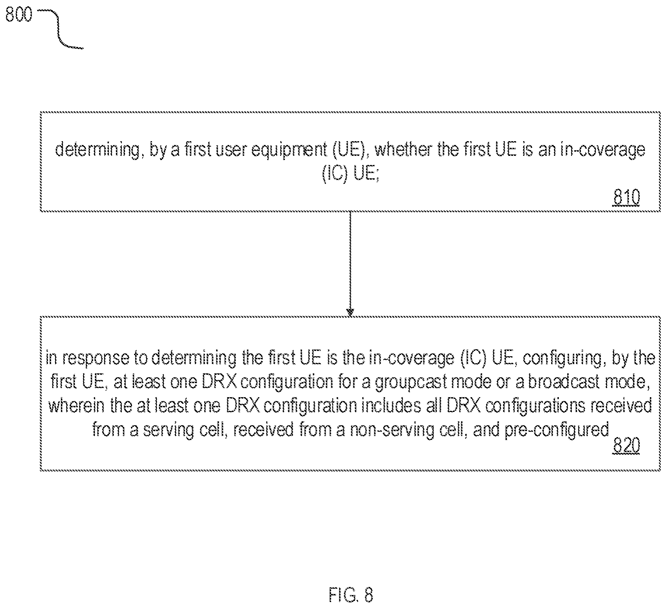

In one embodiment, referring to FIG. 8, a method 800 for wireless communication includes configuring a sidelink discontinuous reception (DRX). The method 800 may include a portion or all of the following steps: step 810, determining, by a first user equipment (UE), whether the first UE is an in-coverage (IC) UE; and step 820, in response to determining the first UE is the in-coverage (IC) UE, configuring, by the first UE, at least one DRX configuration for a groupcast mode or a broadcast mode, wherein the at least one DRX configuration includes all DRX configurations received from a serving cell, received from a non-serving cell, and pre-configured.

In one implementation, the method further includes determining, by the first UE, whether the first UE is a cell-edge UE.

In another implementation, the method further includes, in response to determining that the first UE is the IC UE, performing, by the first UE, a performs sidelink communication using the DRX configuration received from a serving cell.

In another implementation, the method further includes, in response to determining that the first UE is the OOC UE, performing, by the first UE, performs sidelink communication using the pre-configured DRX configuration.

In another implementation, the sidelink communication comprises at least one of the following: a sidelink reception or a sidelink transmission.

In another implementation, the step of determining whether the first UE is the cell-edge UE may include determining, by the first UE, whether the first UE is the cell-edge UE based on at least one of the following: a UE implementation; or a network configuration.

In another implementation, the step of determining whether the first UE is the cell-edge UE based on the network configuration may include obtaining, by the first UE, a threshold value from a network; determining, by the first UE, whether a measurement result is below the threshold value; and in response to determining that the measurement result is below the threshold value, determining, by the first UE, that the first UE is the cell-edge UE.

In another implementation, the measurement result comprises at least one of a reference signal received power (RSRP) or a reference signal received quality (RSRQ).

For one example, in various embodiments, an out-of-coverage (OOC) and a system information block (SIB) may have different DRX configuration for groupcast/broadcast. In one implementation, when an OOC UE performs sidelink communication with an in-coverage (IC) UE, they may use different DRX configuration for groupcast/broadcast.

In another implementation, a UE may find a difference between a SL DRX configured by the network side and the pre-configured. Similarly, a UE may find a difference between the SL DRX configuration sent by the adjacent cell through a SIB and the SL DRX configuration sent by a serving cell through a SIB.

In another implementation, if the SL DRX configuration is pre-configured and/or the serving cell and the adjacent cell are different, the UE may find the difference. It needs to monitor sidelink multicast and broadcast services based on the SL DRX configuration configured on the network side (including the cell and adjacent cells) and/or the pre-configured SL DRX configuration.

Specifically, in another implementation, for an IC UE, it may perform sidelink reception or transmission taking the SL DRX configuration of the serving cell into consideration.

Specifically, in another implementation, for an OOC UE, it may perform sidelink reception or transmission taking the pre-configured SL DRX configuration into consideration.

Specifically, in another implementation, for a UE, it may perform sidelink reception or transmission taking the SL DRX configuration of the serving cell, the SL DRX configuration of the non-serving cell, if it can acquire this information, and the pre-configured SL DRX configuration, if the pre-configured SL DRX configuration is configured, into consideration.

In another implementation, a UE may include all IC UEs.

In another implementation, a UE may include the IC UE which is in the cell edge.

In another implementation, a UE may judge whether another UE is a cell edge UE by one or more methods.

For one method, UE may judge whether another UE is a cell edge UE by UE implementation, and/or based on network configuration. For example, the network provide a threshold value R. If the measurement result such as a reference signal received power (RSRP) or a reference signal received quality (RSRQ) is below a threshold value, the UE may be determined as a cell edge UE.

The present disclosure describes methods, apparatus, and computer-readable medium for wireless communication. The present disclosure addressed the issues with configuring a sidelink discontinuous reception (DRX). The methods, devices, and computer-readable medium described in the present disclosure may facilitate the performance of wireless communication by configuring a sidelink DRX, thus reducing power consumption, and improving efficiency and overall performance. The methods, devices, and computer-readable medium described in the present disclosure may improves the overall efficiency of the wireless communication systems.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments. One of ordinary skill in the relevant art will recognize, in light of the description herein, that the present solution can be practiced without one or more of the specific features or advantages of a particular embodiment. In other instances, additional features and advantages may be recognized in certain embodiments that may not be present in all embodiments of the present solution.
The following items refer to preferred embodiments:
1. A method for wireless communication, comprising:
   determining, by a first user equipment (UE), whether a reporting condition is satisfied; and
   in response to determining that the reporting condition is satisfied, sending, by the first UE, a DRX configuration information of the first UE to the network.
2. The method according to item 1, wherein:
   the DRX configuration information comprises indication indicating that the first UE is interested in a sidelink unicast transmission or reception.
3. The method according to item 1, wherein:
   in response to receiving multiple DRX configuration from the network and each DRX configuration is associated to an index, the DRX configuration information comprises a list of indexes of the DRX configuration.
4. The method according to item 1, wherein:
   the DRX configuration information comprises a UE group ID or a UE group member ID.
5. The method according to item 4, wherein:
   the UE group ID is obtained based on a L2 source ID or a L2 destination ID.
6. The method according to item 1, wherein:
   the reporting condition comprises at least one of the following:
   upon change of the DRX configuration;
   upon successful connection establishment or resuming;
   upon change of interest;
   upon changing QoS profiles; or
   upon acquiring the DRX configuration from an associated peer UE.
7. A method for wireless communication, comprising:
   configuring, by a first user equipment (UE), a discontinuous reception (DRX) by:
   obtaining, by the first UE, a list of DRX configurations;
   determining, by the first UE, at least one DRX configuration from the list of DRX configurations; and
   monitoring, by the first UE, a PC5 message according to the at least one DRX configuration.
8. The method according to item 7, wherein:
   the list of DRX configurations comprises at least one DRX configuration obtained from a network or per-configured.
9. The method according to item 7, wherein:
   the first UE sends the at least one DRX configuration to a second UE in a groupcast mode or a broadcast mode.
10. The method according to item 7, wherein:
   at least one DRX configuration of the list of DRX configurations is associated with a set of quality of service (QoS) parameters.
11. The method according to item 7, wherein:
   each DRX configuration of the list of DRX configurations comprises a DRX cycle and a plurality of slot offsets or cycle start offsets.
12. The method according to item 7, wherein:
   each DRX configuration of the list of DRX configurations comprises a DRX cycle, an on-duration timer, an inactivity timer, and a plurality of slot offsets or cycle start offsets.
13. The method according to item 7, wherein:
   each DRX configuration of the list of DRX configurations comprises a DRX cycle, an on-duration timer, a slot offset or a cycle start offset, an interval T, and a number N.
14. The method according to item 13, wherein:
   the interval T is an interval between two slot offsets or two cycle start offsets.
15. The method according to item 13, wherein:
   the number N is a number of slot offsets or cycle start offsets.
16. The method according to item 7, wherein obtaining the list of DRX configurations comprises:
   determining, by the first UE, a list of QoS based on a destination ID; and
   obtaining, by the first UE, the list of DRX configurations based on each QoS in the list of QoS.
17. The method according to item 16, wherein:
   in response to more than one DRX configurations corresponding to the destination ID:
   the first UE selects a DRX configuration comprising a shortest DRX cycle.
18. The method according to item 7, wherein:
   the DRX configuration comprises a DRX cycle, an on-duration timer, an inactivity timer, and a plurality of slot offsets or cycle start offsets.
19. The method according to item 18, wherein:
   the first UE determines the slot offset or cycle start offset based on the destination ID.
20. The method according to item 19, wherein:
   the slot offset or cycle start offset based on the destination ID is a I-th value in a slot offset list or cycle start offset list corresponding to the DRX configuration, I being mod (ID, N) +1, wherein:
   mod is a modulus function,
   ID is the destination ID, and
   N is a number of slot offsets or cycle start offset.
21. The method according to item 20, wherein:
   DRX configuration information comprises the number of slot offsets (N).
22. The method according to item 19, wherein:
   in response to DRX configuration information comprising only one slot offset, the first UE determines the slot offset for the associated destination ID.
23. The method according to item 16, wherein:
   in response to more than one QoS profiles corresponding to the destination ID associating to more than one DRX configurations:
   the first UE determines more than one DRX configuration based on the more than one DRX configurations.
24. The method according to item 23, wherein:
   the first UE determines more than one DRX cycles and more than one on-duration timers for the determined more than one DRX configurations corresponding to the destination ID based on the more than one DRX configurations.
25. The method according to item 23, wherein:
   the first UE determines an inactivity timer for the determined more than one DRX configurations corresponding to the destination ID based on at least one of the following:
   a minimum value of more than one for inactivity timers based on the more than one DRX configurations;
   an average value of the more than one for inactivity timers based on the more than one DRX configurations; or
   an inactivity timer of a selected DRX configuration based on the more than one DRX configurations.
26. The method according to item 25, wherein:
   the selected DRX configuration comprises a shortest DRX cycle.
27. The method according to item 23, wherein:
   in response to each DRX configuration comprising a slot offset, the first UE determines a slot offset for an on-duration timer based on the slot offset in each DRX configuration.
28. The method according to item 23, wherein:
   in response to each DRX configuration comprising more than one slot offsets, the first UE determines a slot offset for an on-duration timer based on the destination ID corresponding to each DRX configuration.
29. A method for wireless communication, comprising:
   configuring, by a first user equipment (UE), a discontinuous reception (DRX) by:
   determining, by the first UE, whether a second UE supports a DRX capability; and
   in response to determining that the second UE supports the DRX capability, determining, by the first UE, whether to activate the DRX function.
30. The method according to item 29, wherein determining, by the first UE, whether the second UE supports the DRX capability comprises:
   determining, by the first UE, whether the second UE supports the DRX capability based on at least one of the following: a destination ID or a cast type.
31. The method according to item 30, wherein:
   the first UE determines that the second UE is a R16 UE or the second UE does not support the DRX capability.
32. The method according to item 29, further comprising:
   in response to the first UE determining that the second UE supports the DRX capability, determining, by the first UE, to activate the DRX function.
33. The method according to item 29, wherein determining, by the first UE, whether the TX UE supports the DRX capability comprises:
   determining, by the first UE, whether the second UE supports the DRX capability based on a group message via a non-access stratum (NAS) layer.
34. A method for wireless communication, comprising:
   receiving, by a user equipment (UE), a sidelink transmission or reception resource pool information from a network, or preconfiguring the sidelink transmission or reception resource pool information, wherein the sidelink transmission or reception resource pool information comprises an indication information indicating at least one of the following:
   whether a sidelink DRX capable UE can use a sidelink resource pool;
   whether a sidelink DRX non-capable UE can use the sidelink resource pool;
   that only the sidelink DRX capable UE can use the sidelink resource pool; or
   that only the sidelink DRX non-capable UE can use the sidelink resource pool.
35. A method for wireless communication, comprising:
   determining, by a first user equipment (UE), whether the first UE is an in-coverage (IC) UE; and
   in response to determining the first UE is the in-coverage (IC) UE, configuring, by the first UE, at least one DRX configuration for a groupcast mode or a broadcast mode, wherein the at least one DRX configuration includes all DRX configurations received from a serving cell, received from a non-serving cell, and pre-configured.
36. The method according to item 35, further comprising:
   determining, by the first UE, whether the first UE is a cell-edge UE.
37. The method according to item 36, wherein determining whether the first UE is the cell-edge UE comprises:
   determining, by the first UE, whether the first UE is the cell-edge UE based on at least one of the following:
   a UE implementation; or
   a network configuration.
38. The method according to item 37, wherein determining whether the first UE is the cell-edge UE based on the network configuration comprises:
   obtaining, by the first UE, a threshold value from a network;
   determining, by the first UE, whether a measurement result is below the threshold value;
      and
   in response to determining that the measurement result is below the threshold value, determining, by the first UE, that the first UE is the cell-edge UE.
39. The method according to item 38, wherein:
   the measurement result comprises at least one of a reference signal received power (RSRP) or a reference signal received quality (RSRQ).
40. A wireless communications apparatus comprising a processor and a memory, wherein the processor is configured to read code from the memory and implement a method recited in any of items 1 to 39.
41. A computer program product comprising a computer-readable program medium code stored thereupon, the computer-readable program medium code, when executed by a processor, causing the processor to implement a method recited in any of items 1 to 39.

## Claims

1. A method for wireless communication, comprising:
configuring, by a first user equipment, UE, a discontinuous reception, DRX, by:
determining, by the first UE, whether a second UE supports a DRX capability based on a destination ID; and
in response to determining that the second UE supports the DRX capability, determining, by the first UE, to activate a DRX function.

2. The method according to claim 1, wherein:
the destination ID comprises a destination layer 2, L2, ID.

3. The method according to claim 1, wherein determining, by the first UE, whether the second UE supports the DRX capability comprises:
determining, by the first UE, whether the second UE supports the DRX capability based on a group message from an upper layer to an access stratum, AS, layer.

4. The method according to claim 3, wherein:
the upper layer comprises a non-access stratum, NAS, layer.

5. An apparatus comprising:
a memory storing instructions; and
a processor in communication with the memory, wherein, when the processor executes the instructions, the processor is configured to cause the apparatus to perform configuring a discontinuous reception, DRX, by:
determining whether a second user equipment, UE, supports a DRX capability based on a destination ID; and
in response to determining that the second UE supports the DRX capability, determining to activate a DRX function.

6. The apparatus according to claim 5, wherein:
the destination ID comprises a destination layer 2, L2, ID.

7. The apparatus according to claim 5, wherein determining whether the second UE supports the DRX capability comprises:
determining whether the second UE supports the DRX capability based on a group message from an upper layer to an access stratum, AS, layer.

8. The apparatus according to claim 7, wherein:
the upper layer comprises a non-access stratum, NAS, layer.

9. A non-transitory computer program product comprising a computer-readable program medium storing instructions, wherein, the instructions, when executed by a processor in an apparatus, are configured to cause the processor to perform configuring a discontinuous reception, DRX, by:
determining whether a second user equipment, UE, supports a DRX capability based on a destination ID; and
in response to determining that the second UE supports the DRX capability, determining to activate a DRX function.

10. The non-transitory computer program product according to claim 9, wherein the destination ID comprises a destination layer 2, L2, ID.

11. The non-transitory computer program product according to claim 9, wherein determining whether the second UE supports the DRX capability comprises:
determining whether the second UE supports the DRX capability based on a group message from an upper layer to an access stratum, AS, layer.

12. The non-transitory computer program product according to claim 11, wherein:
the upper layer comprises a non-access stratum, NAS, layer.
